# EUROPEAN PATENT SPECIFICATION

(11) **EP 0 944 229 B1**
(45) Date of publication and mention of the grant of the patent: **22.01.2003**
(21) Application number: 99102687.3
(22) Date of filing: 12.02.1999
(51) Int. Cl.: H04M 11/00

(54) **System and method for communicating information through a telephone network**
System und Verfahren für Informationsübertragung über ein Telefonnetzwerk
Système et procédé de communication d'information à travers un réseau téléphonique

(30) Priority: 12.02.1998 US 22558
(43) Date of publication of application: 22.09.1999
(73) Proprietor: GATCO, Freehold, NJ 07728 (US)
(72) Inventor: Savery, Winsor T., Manalapan, NJ 07726 (US); Lamah, Ahmad, Howell, NJ 07731 (US); Ayoub, Mohamad, Freehold, NJ 07728 (US)
(74) Representative: Kaminski, Susanne

(56) References cited:
- GB-A- 2 274 042
- US-A- 5 544 225

## Description

The invention relates to a system and a method for communicating information through a telephone network from a first unit having a transceiver to a second unit having means to retrieve the information.

Telephone network systems communicating information from a calling unit to a receiving unit have been described in the art. U.S. patent No. 5,544,225 discloses a cellular telephone network transmitting data messages from a truck trailer to a central platform. The data comprises current position and status of the trucks of a fleet. The information is transmitted through the data channel of the cellular telephone network. The information is encoded into the mobile identification number or the electronic serial number of the cellular transmitter by altering identifiers currently not being used. At the platform the data is collected for further evaluation. The identifiers modified are dependent on the telephone network. In practice, the telephone network needs to be controlled by the provider offering such a service.

Other systems for communicating information through common telephone networks are known in the art where the transmission of information takes place during a regular telephone call connection. The user will be charged with the cost for transmitting the information. The charging is usually based on fixed time intervals that are often longer than the actual time interval needed for the transmission of data. The communication costs become expensive as more and more transmissions take place. In order to monitor a fleet of trucks, for example, the frequency of data transmission will be excessive and such charges may escalate quite quickly.

It is an object of the invention to provide a system for communicating information through a telephone network that is cost efficient.

It is an object of the invention to provide a method for communicating information through a telephone network that is cost efficient.

The foregoing objects are solved by a system according to the features of claim 1 and by a method according to the features of claim 14.

The system and the method of the invention are based on common telephone network technology. The data transmission according to the invention uses installed telephone networks and is transparent to other regular telephone users.

According to the invention there are provided first means arranged at the first unit that convert the information to one of a multitude of assigned telephone call numbers. The call numbers are uniquely identifying the information. The call numbers are transmitted over the telephone network to the second unit where means are arranged to receive the assigned call numbers and extract the information therefrom before a telephone call connection between the respective units is completed.

Said assigned telephone call numbers are available from the telephone network operator on a rental basis for the so called "caller ID" service or alternatively for the "callback" service. For "caller ID" an automatic number identificaion (ANI) of the calling party is transmitted to the called party and is captured there to identify the calling party. For "callback" or "direct inward dialing" (DID) the called telephone number is transmitted to the called party. In conventional systems using "caller ID" and "callback", the receiving telephone records the number that is calling or that is to be called without having to complete and pay for the actual call, because the caller's telephone number (ANI) is passed. In the invention, these ANI or DID telephone numbers are associated to items of information. The information itself is different from that telephone number. The ANI or DID numbers are captured at the receiving side before the telephone call is answered and a telephone call connection is completed. Reserving a set of numbers from the telephone company is based on a fixed, e.g monthly fee. Area code, exchange and prefix numbers are assigned to the party renting the numbers. Any of these telephone numbers may be used in the regular telephone network. The charge is irrespective of the user frequency so that the cost for data transmission is foreseeable and independent of the number of transmission actions and amount of data.

One of the units is still "on-hook" thereby preventing a telephone call connection being completed. Thus, the data transmission employing the invention causes no telephone call charges. The only costs are the charges for the assignment of the ANI or DID telephone numbers.

The data to be transmitted may be of any type and origin. When the first unit is a mobile unit, e.g. a vehicle in a fleet of trucks, the data may be location information generated in a GPS (Global Positioning System) receiver mounted on the vehicle. The location may be transmitted through a cellular telephone network by way of longitude and latitude or by way of direction and distance employing dead reckoning. In addition, all status information generated at the vehicle can be transmitted, e.g. speed, status of load, technical data from the engine, motor oil quality, tire pressure, estimated time of arrival, etc. The data is collected at the second unit, e.g. a central platform, comprising a switch with software enabling the information recovery and computing means with dedicated software for data storage and evaluation. Also, the first unit may be any type of apparatus having telephone call capability, even with fixed position, e.g. a meter in a house or a vending machine. Any meter reading and commercial report, e.g. vending statistics or filling state, resp. are transferred to the central platform.

These and other features of the invention, the preferred embodiments and the advantages thereof will be presented in more detail in the following description, taken in connection with the accompanying drawings, in which:
Figure 1 schematically shows a typical cellular telephone network system communicating with a remote location by means of a cellular transceiver in a mobile unit;
Figure 2 is a flow diagram depicting the process of transmitting location information in form of longitude and latitude for the mobile unit according to the invention;
Figure 3 is a flow diagram depicting the reception of information at a central platform according to the first embodiment of the invention.

When a call is made from a calling station to a switch, the call will go through a central office of a telephone company. The central office sends the call through the dedicated T1 line to the switch. While the switch is in the "on-hook" state, it checks the source of the incoming call. The switch is supposed to send a ring tone or ringing signal back to the calling station. During the short time where the switch has to send ringback tones, data transmission is performed, e.g. location information of a moving vehicle or metering information from a metering device. There is an open trunk or channel between the calling station and the switch with full duplex transmission capability. The calling station is not being charged as long as the called station is still "on-hook" during the time interval when a ring or busy tone is sent, i.e. the call is incomplete. During handshake, the calling station and the switch can exchange messages. The time for sending information will be limited, e.g. up to one minute in maximum. To transmit further information, the call attempt has to be performed again. After the switch received the information from the calling stations, it is stored at the host of the central platform to be retrieved by end users from different locations. The end users access the information either by modem dial up, Internet, or a dedicated line. The switch has all the necessary software and hardware to behave like an interexchange carrier, such as on-hook signaling, off-hook signaling, processing incoming calls while the switch is still on the hook, providing billing, and answer supervision. The switch is connected to the central office switch by a dedicated line or trunk, i.e. T, E, or ISDN. The switch receives information while it is sending the ring or busy tone and receives ANI or DID telephone numbers representing the information.

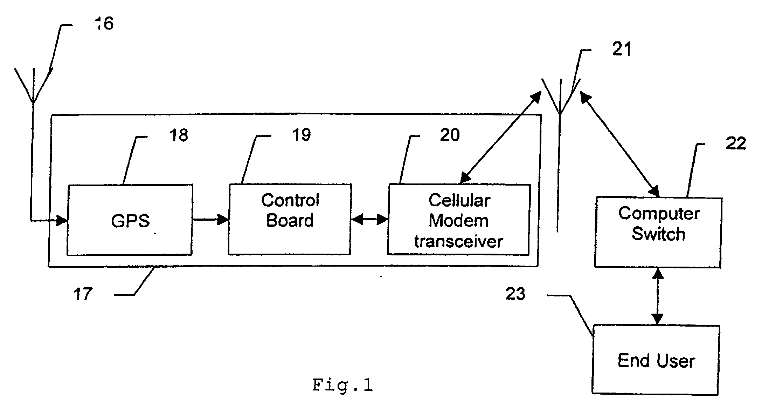

Figure 1 schematically illustrates a system using satellite linked Global Positioning System (GPS) with proprietary software to trace vehicles using maps on a computer which display the exact location of the vehicle. A GPS receiver 18 of the vehicle 17 captures the longitude and latitude information from a satellite using antenna 16. A control board 19 receives the location information and arranges it into a data format according to the invention as described in detail below. The vehicle further comprises a cellular transceiver 20. The transceiver 20 establishes a wireless connection to a receiving station 22 through a cellular tower 21. The station has the capability of a switch and comprises computer means. The communication can be from the cellular transceiver to the switch and vice versa. The computer connected to the switch collects and stores the information received. It may be retrieved by an end user 23. Also, the enduser 23 can control the switch or input any information to send back to the vehicle.

According to the invention, the information is transmitted via a multitude of assigned telephone numbers to which the information is converted.

The computer switch or central platform 22 has a switching unit that captures both the called phone number and the calling phone number that are transmitted via DID and ANI services provided with the telephone network (DID - direct inward dialing; ANI - automatic number identification). The telephone numbers for DID and ANI be reserved from the telephone company on basis of a monthly charge for each number, e.g. $ 1.00 per DID or ANI. When reserving ten thousand numbers of given area code and exchange, the cost would amount to $ 10,000 per month, regardless of the number or frequency of various communications using these numbers for data transmission. The only cost to the end user would then be the costs for obtaining information reports to be contracted with the operator of the system.

The control location 22 is equipped with a computer with software that takes the longitude and longitude information and defines the exact location on the U.S. map. At the control location 22, the switch is programmed to capture certain phone numbers that have the kind of sequence of the reserved DIDs and ANIs that are assigned by the telephone company.

Certain telephone numbers have to be allocated solely for the invention that are comprised of a ten digit number of area code, exchange and prefix as:
Y1Y2Y3 - X1X2X3 - Z1Z2Z3Z4
where each of Y1, Y2, Y3 are any number from 1 to 9 and X1, X2, X3, Z1, Z2, Z3, Z4 are any number from 0 to 9. Y1Y2Y3 is the area code; X1X2X3 is the exchange. Z1Z2Z3Z4 are the last four digits of a phone number. The exchange number may be obtained from the local telephone company as an exchange not yet assigned in the area code serving the remote location. The prefix Z1Z2Z3Z4 represents any one of ten thousand available numbers in such area code and exchange available for reservation by the system operator from the telephone company.

In the operation of the system of Figure 1 the control board captures the sensed location information from the GPS or other status information generated at the vehicle. It is converted into a sequence of these ten digit telephone numbers, either as DID identifying the called unit or as ANI identifying the calling unit.

The GPS receiver captures the longitude and the latitude of the moving vehicle based on its location. The control board 19 takes the longitude and latitude information and converts it into a sequence of phone numbers, e.g. DID. For example, latitude is 36 degrees 52 minutes 14.31 seconds (36°52'14.31") and longitude is 115 degrees 25 minutes 36.71 seconds (115°25'36.71"). The area code is assumed as 732 with a reserved exchange of 461 for the central platform.

Starting with longitude the control board 19 converts the information from the GPS receiver 18 to the telephone number 732-461-1152. The cellular transceiver 20 transmits the call number 732-461-1152 via the tower 21 to the central platform 22 where the computer switch captures the number. In accordance with the programming of the computer, the first six digits are stripped, and the last four digits are kept, in accordance with the example the first four digits of the longitude 1152. The reception and stripping of the parts of the telephone number representing the latitude information is performed before any telephone call connection is completed so that no telephone call connection charge is to be paid. Next, the cellular transceiver 20 transmits a second call number 732-461-5367 to the central platform where the computer captures the number a second time and similarly strips the first six digits and keeps the last four digits 5367 as the last four digits of the longitude. The computer then stores the eight digits 11525367 as the longitude representing 115 degrees 25 minutes 36.7 seconds.

The same steps are then followed to transmit the latitude information. The transceicer 20 transmits 732-461-3652, where the computer captures it and strips the first six digits and keeps the last four digits 3652. Then, the transceiver 20 transmits the second sequence 732-461-1431 to be captured by the computer switch stripping the first six numbers and keeping the last four digits 1431. The information then stored is the latitude 36 degrees 52 minutes 14.31 seconds.

With both the longitude and the latitude stored at the central platform the location of the vehicle can be displayed on the computer 22 within 10 feet accuracy when using conventional map software such as Delorme, map expert.

Additional information, e.g. speed of the vehicle, can be transmitted that is either provided by the GPS unit or from a speedometer of the vehicle that delivers a digital data output format. For example, the speed is 70 mph. The control board 18 operates to convert such information into 732-461-7000 to be transmitted by the cellular transceiver and to be captured by the computer switch 22. There, only the last four digits are stripped and converted back into the speed information of 70 mph.

Where the communication of the time of data reception or of transmission is of concern, then the cellular transceicer converts the time to transmit 732-461-1645 to designate the transmission of longitude, latitude and speed to be at 4:45 pm. The computer switch 22 again stripping the six area code and exchange digits from the captured coded call number identification.

With each of these examples, the computer switch 22 captures both the ANI of the sending unit and DID of the code number called, before any telephone call connection is completed. As a result, no charges accrue for the transmission, and the only cost involved is the monthly reservation charge of the telephone company for each line reserved, e.g. $ 1.00 per line and per month.

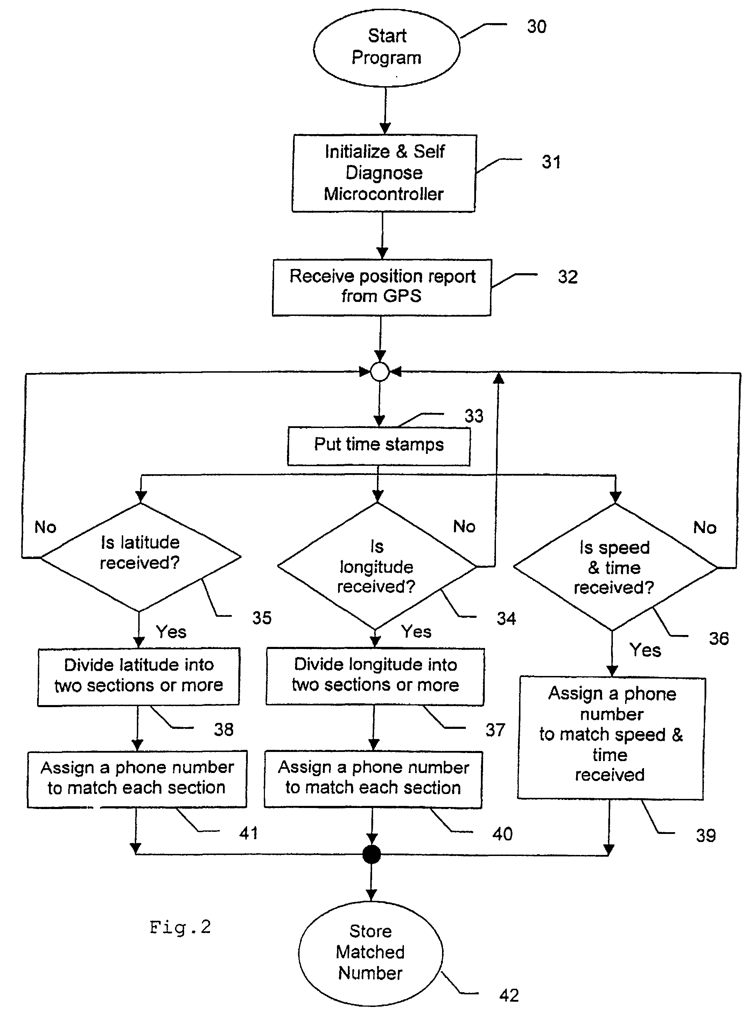

Referring to the flow diagram of Figure 2 for the first mobile unit, the computer program is started at 30. At 31 the microprocessor controlling the data flow at the vehicule unit initializes and internally diagnoses the program for operating the control board 19. The location or status information is received at 32 from the GPS receiver 18. A time stamp is inserted at 33 from an on-board clock, at such time a transmission by the transceiver 20 is to be made to the central platform. Block 34 analyses the received information from the GPS unit and where longitude information is received, divides it into two or more components of four digits each in block 37 as the assigned coded telephone call number to be added to the area code and exchange digits in uniquely identifying the longitude information. After analysis, the block 40 sends such number to be transmitted to the cellular transceiver and also stores it at block 42.

Similarly, block 35 looks to see the receipt of latitude information from the GPS unit, divides it into two or more components of four digits each in block 38 as the assigned coded telephone call number to be added to the area code and exchange digits at 41 in uniquely identifying the latitude information for transmission. Each of the blocks 37, 38 divide the longitude and latitude information respectively into two or more components to allow the transmission of the four digits each along with the area code and exchange digits in accurately conveying to within ten feet the longitude and latitude positions measured in degrees, minutes and seconds.

Block 36 investigates to determine the receipt of speed information from the GPS unit, and assigns a telephone call number to it in block 39, identifying the speed of the vehicle for transmission by the cellular transceiver. As with a sending of a coded telephone call number, identifying the time of transmission no dividing of the information into two sections is required as a complete definition of speed in miles per hour and time in military numbers can be fully communicated in only the last four digit prefixes of the telephone call number assigned. Where blocks 34, 35, and 36 do not receive any GPS information, the flow diagram indicates their remaining in alert condition, awaiting the receipt of such information. Each coded telephone call number assigned for transmission is stored in the buffer at 42.

The flow diagram of Figure 2 continues to transmit its assigned telephone call numbers representing longitude, latitude speed and time at intervals established in the control board. In that way, a tracking of time stamped locations can be displayed at the central platform. Occasions may arise where the transmission of such call number information would be desirable to be upon command from the central platform, e.g. to transmit a series of location information stored at the vehicle. Thus, upon receipt along the tower 21 and cellular transceiver 20 from the computer switch 22 of a call number indicating to activate the circuitry of control board 19 that received signal initiates the conversion of the GPS information and its transmission back to the central platform 22 for display. Alternatively, the transmission of location information may be performed on preprogrammed intervals of every 30 minutes or so. The command could be sent to change the interval spacing form 30 to 15 minutes, for example.

The microprocessor governed control board 19 in the vehicle comprises a clock that controls the timing. The microcontroller is connected to a random access memory (RAM) to store the location information and status information. A read only memory (ROM) independently stores the operating program of the control board. The clock generates the time stamps to be placed on information as received from the GPS unit. The location information is stored in the RAM together with the time stamp for later retrieval to the central platform which can be initiated by a command from the central platform to the vehicle as described above.

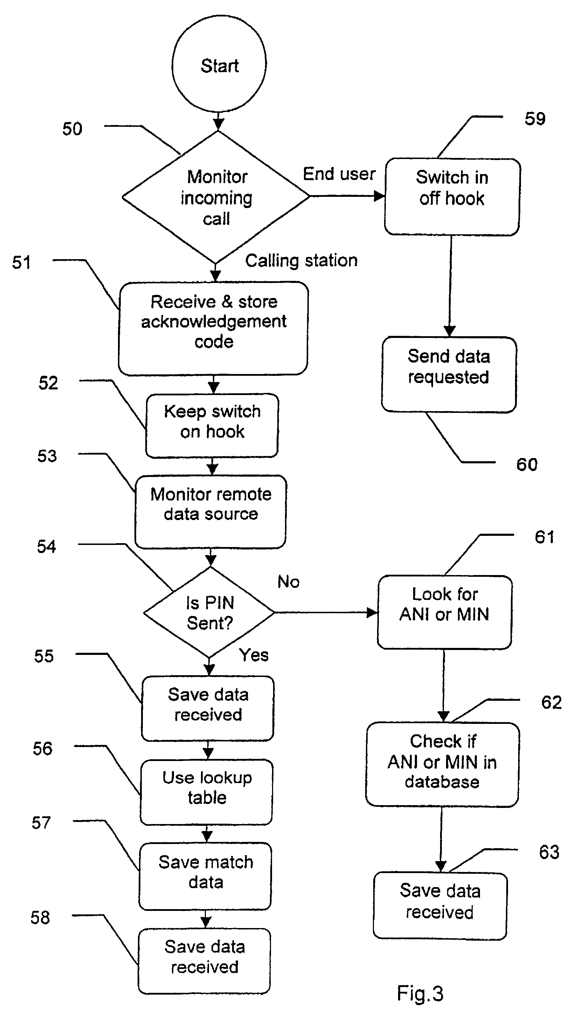

The flow diagram of Figure 3 shows the operations at the computer switch 22. It allows receiving data messages from remote fixed or mobile locations while the switch is still "on-hook", i.e. before the telephone call connection is completed and the phone company starts charging for the transmission cost of the data transmission from the calling party to the switch. The program of the computer switch is constantly monitoring incoming calls at block 50. As calls come in, the program checks where the call is coming from, either from end users to request data or from a calling station, e.g. a vehicle, metering device, or vending machine, to send data to the switch. When the call comes from a calling station, the receiver acknowledges as in function block 51 when activated. The switch stays "on-hook" as in block 52 and sends either a ring or a busy signal to the calling station. At the same time, it receives the data message from the calling station according to any of the embodiments described in this invention as shown in block 53. Included in the data is either a pin number or a mobile identification number identifying the calling station. When a pin is received along with the called number and the data sent at block 54, the host will save the information for future retrieval by end users at 58 or 63. If the telephone company does not pass the mobile identification number (MIN) or the automatic number identification (ANI) of the calling party, these numbers are stored at the host computer for every calling station, and a pin number is assigned to each ANI or MIN number. After a storage in block 55, a look up table is used in blocs 56, 57 to cross match the pin with its corresponding telephone number MIN or ANI. When the ANI or MIN of the calling party is passed through the telephone network at block 54, ANI or MIN are cross checked with the entries in the database at the host at block 61. When there is a match at block 62, the data received is stored at block 63. When an end udser or a customer requests data previously stored at block 58 or 63, entering the pin, the ANI or MIN, he gets the data that corresponds with the pin. During the data retrieval the switch is "off-hook" at block 59 and the data requested will be sent at 60.

Another embodiment to transmit location information obtained form the GPS receiver at the vehicle to the central platform using DID and/or ANI telephone numbers is as follows.

In a first configuration the embodiment uses a block of 10,000 ANIs or DIDs with continuous numbers that are obtained from the telephone company. Every number is associated to a corresponding measurement of longitude and latitude whereby the matching begins at a reference point and comprises a certain area of locations, e.g. from 10.00 degrees North of longitude or latitude to 19.999 degrees North of latitude or longitude, resp. This matches 10,000 exact geographic locations as determined by latitude and longitude with 10,000 dedicated telephone numbers (ANIs or DIDs). In this example, the location information obtained in longitude and latitude coordinates from the GPS receiver comprises a range of values, e.g. from 10.00 degrees North to 19.999 degrees North. Each range is divided into a number of 10,000 increments with each increment being associated to a telephone number (ANI or DID). The telephone numbers associated to longitude and latitude are transmitted to the central platform and converted back to the location information.

All possible locations where the vehicle can be positioned are divided up into areas of the size indicated above. Each location in a particular area is associated with a unique telephone call number. Similar to the example above, the area code and exchange is fixed from the telephone company providing these numbers and the four prefix numbers are associated to the locations. For example, the north east location will include 40.00 degrees North latitude and stretches from Belmar NJ west to Pittsburg, Pa., approximately 49.99 degrees North latitude. On the longitude scale, the north east location begins at 70.00 degrees West near Portland, Maine to Hamilton, Ontario, Canada which is 79.99 degrees West. In this huge area the accuracy will be within approximately 800 feet when using this embodiment. In order to enhance accuracy up to 80 feet the area must be shrinked.

Different of such areas are distinguished by another unique telephone number (ANI or DID) associated to the particular area. That telephone number is transmitted together with the number representing the relative location in the area. In actual practice, the vehicle transceiver will send an ANI or DID, which number will signal the specific area that the vehicle is in. If the North East location area is used, only 15 ANIs or DIDs will have to be set aside to identify the 15 areas of the U.S. and Canada whose latitudes and longitudes are divided by multiples of 10,000. If the areas are shrunk more ANIs/DIDs defining the area are needed. For example, areas that are bounded by units of 1 degree latitude and longitude and accuracies of better than 100 feet, up to 1500 ANIs or DIDs dedicated for area selection and only 300 ANIs dedicated to location within the location area are required.

Every time a vehicle moves from one location area to another, it signals the central platform by calling with the number for the new location area into which it has moved. The numbers that are dedicated for location within each location area will always have the same positions relative to each other within the standard grid of each of the various location areas. Once a new location area has been entered, and its identifying ANI or DID sent, that signal will not be sent again as long as the vehicle stays within that area. As soon as the vehicle leaves the location area the vehicle's computer will immediately send the ANI or DID telephone number of the new location area to the central platform.

In operation, the vehicle makes the cellular call to the computer switch. The vehicle phone call is identified by its ANI. The central platform computer strips and keeps the ANI containing the information. The vehicle PC "hangs up" as soon as the central computer switch has had sufficient time to strip and keep the ANI code number. The computer switch then immediately converts the ANI code number into an exact coordinate, either latitude or longitude. In the example of the North East location area, for instance, the 5000th number in the block of 10,000 numbers would be exactly 45 degrees North for latitude and 75 degrees West for longitude. Immediately after one coordinate is stripped off the attempted call, the process is repeated with the other coordinate.

Yet an alternative embodiment to transmit location information using the callback method is as follows. The country is divided into a number of, e.g. 15, location areas as described above and 15 ANIs or DIDs identify the location area. As long as a vehicle stays in its location area the identifying ANI or DID does not have to be identified or transmitted when the vehicle is sending location reports to the central computer switch. This first location report is only used when location areas are changed. After that more detailed location reports are transmitted. The location information to be transmitted is divided into at least a portion of coarse information and a portion of fine information. The location information is the sum of coarse and fine portion. The coarse and fine information items are transmitted and added at the receiving computer switch to convert them back to the desired information.

Following this example, a second location report is transmitted determining the relative position of 100 consecutively numbered ANIs or DIDs in the same grid of 10,000 squares that is in every location area. The second location report on latitude for instance, might identify the location with the 38th of the 100 ANIs or DIDs as being at point 38. This would be at 43 degrees North plus 80% of the distance to 44 degrees North. This puts the latitudinal position at somewhere between 40.480 degrees North and 40.486 degrees North.

A third latitudinal position report comes immediately after the second report referring to another 10,000 squares with 100 measuring points on each side. Each square will now be in an area of 1 degree. In this case the measuring point would be 43.480 degrees North to 44.486 degrees North. If ANI or DID number 50 of the 100 available numbers were transmitted, this would mean that the location was at 43.4830 degrees North. If ANI or DID number 75 were transmitted, this would mean that the location was 43.4845 degrees North. The process is continued until the necessary accuracy is achieved, e.g. when the accuracy exceeds the accuracy of the GPS system by being less than 100'.

Once the latitudinal information is sent the same method is used for the longitudinal location. Only 115 ANIs or DIDs were used in this example.

The embodiment above can also be applied to a dead reckoning based method where distance and direction are transmitted and refined from coarse to fine information that is additively combined at the central computer switch. For example, the vehicle has gone exactly 81 miles and 300 feet in a direction of 71 degrees 22 seconds East since its last location report. The vehicle uses only 100 ANIs or DIDs to send this information.

The first distance report begins using a 1000 mile maximum with ANI or DID no. 8. This represents that the vehicle has gone between 80 and 90 miles. The second distance report uses ANI or DID no. 11. This means that the vehicle has traveled 80 miles plus between 1.1 and 1.2 miles which results in combination with the first distance report to 81.1 to 82.2 miles or 81 miles plus 264 to 528 feet. The third distance report delivers ANI or DID no. 10 which reveals that the distance is 81 miles 290 feet and 81 miles and 317 feet. This is greater than the accuracy of the GPS unit, so that the transmission of distance can be stopped.

The first direction report transmits ANI or DID no. 19. This narrows the direction down to between 71 degrees 24 seconds East and 72 degrees 00 seconds East. The second direction report transmits ANI or DID no. 6 which means that the direction is between 71 degrees 21.6 seconds East and 71 degrees 25.2 seconds East. The third direction report transmits ANI or DID no. 11 which narrows the direction further down to 71 degrees 21.996 seconds East and and 71 degrees 22.032 seconds East. The fourth and final directional report delivers ANI or DID no. 9 which after rounding off leads to a figure of 71 degrees 22.00 seconds East which is greater than the GPS accuracy. Dead reckoning is determined by both the distance and direction from the last report to find an exact location.

It is to be noted that the same method may be reversed and used by the central office computer switch to plot routes for vehicles on display units. If a truck has a pick up or delivery this system can be used to draw a map for the drivers as follows. For latitude - using the telephone numbers for the location system spelled out above, in the U.S. 156 telephone numbers will be used to identify the first three digits of the location between 24 degrees North, which on the South is Key West, Florida to 50 degrees North, which is Winnepeg, Manitoba Canada. Another 1000 telephone numbers will be used, the last three digits of which will be the same as the last three digits of the six digit identified location.

For example, a location of 26 degrees 10.22 seconds latitude is to be transmitted with the 156 telephone numbers being between 300-0240 and 300-0500. This has seven digits which gives it an accuracy of better than 40 feet. The first three digits of the number are 261 so that the phone number of 300-0261 is used to transmit the first three numbers. After that call attempt has been terminated, another call is made to transmit the last four digits. The telephone numbers of 300-0001 to 301-1000 identify these last four digits of the location. In this example, the last three digits are 022 which is revealed by the number 300-0220. In this example a total of only 1000 ANIs or DIDs as code numbers and two call attempts were used for latitude.

Normally only four calls will be made to establish location with two calls for latitude and two calls for longitude. Often, only two will be sufficient, one for each coordinate. No more than six will ever be required because the additional two are only required when the vehicle moves out of one large zone to another, for instance when the vehicle moves from the 26 degrees latitude North to 27 degrees latitude North.

An alternative method would be to use 27 ANIs or DIDs to identify the first two digits of longitude or latitude, another 60 ANIS or DIDs to identify the next two digits and another 100 to identify the next two and 10 more to identify the last digits for a total of 197 ANIs or DIDs. In this example, the first three digits of the telephone number are different for each transmission minimizing the probability of error. ANIs or DIDs with the numbers 302-0024 through 302-0050 are used to identify the first two digits of longitude or latitude. In the example above, the first attempted call would use the number 302-0026 which would deliver the first two digits as 26. The second two numbers would always be between 00 and 60 which would correspond to 303-0000 to 303-0060. The middle two digits would be transmitted by the number 303-0010. The next two digits would always be between 00 and 99. And if the number 304-0000 to 304- 0099 was used, the 304-0022 would accurately identify the next numbers as 22. The final digit would be 305-0000, if 305-0000 to 305-0002 were used to identify the final digit.

As regards longitude the lower 48 U.S. states are situated between 69 degrees West and 126 degrees West. In this embodimet this only adds 57 numbers to the original 186 resulting to a total of 243. In the example, longitude is 80 degrees 12.27 seconds West. If 306-0069 to 306-0126 represented these numbers, the number 80 would be identified by 305-0080 ; the number 12 from the previous example and the number 304-0027 would identify the last two numbers as 27. In addition, the speed of the vehicle could be transmitted with an additional 140 ANIs where the last three digits would code the speed. The number 307-0085 would signal that the vehicle was moving at 85 m.p.h.

It is obvious from the description that there is a great advantage in terms of reduced number of ANIs and DIDs that are needed if the size of the territory being described can be reduced. If the location information that is being transmitted begins with the entire nation it takes extra ANIs and DIDs to shrink the territory down to, for example, an area of 1000 square miles, than if the search could have begun with the smaller territory.

One simple way to start with a smaller territory is to utilize the identifying information as to the cell territory that is sent by the carriers in the cells. This information allows the system in this invention to begin its search in a relatively small area, perhaps small enough to only require one initial report when the vehicle enters a new cell and after that, just one ANI or DID for every location report. With the information on the cell, the computer switch should be able to use these signals to locate the vehicle in the cell. When the vehicle moves into a new cell the meaning of each code ANI would change according to the prearranged coding system.

The information to be transmitted according to the invention is not limited to location information. In principle, every type of information can be transmitted form the first unit to the second unit. In truck fleet management it is often desired to know the estimated time of arrival (ETA) at the central platform in order to dispose of the truck. For the transmission of ETAs, the fleet management company obtains e.g. 4000 ANIs or DIDs with the numbers e.g. 200-0001 to 200-4000. When the receiving computer at the switch gets the number 200-1441, for instance, this is converted into a message that is displayed on the computer as "Your next message will be a revised ETA." This is immediately followed by another number which in this example is 200-0870. In this example, 2:28PM is the 870th minute of the day.

The same message can be sent with only 272 ANIs or DIDs using the following method which will be accurate to within 5 minutes. In this case the telephone number is 200-0174. The number 174 is used because 870 is the 174th quintile where 5 x 174 = 870. The time is contained in a 5 minutes interval. There are 174 repetitions of the time interval to reach the ETA 2:28PM departing from the reference time 00:00h.

An alternative way to send the ETA using only 40 ANIs is as follows. Nine ANIs or DIDs, e.g. 200-0009 would give the first division of time used in this example. Every number would represent 160 minutes of time. The number 200-0001 would send the message that the ETA is between 0 - 160 minutes of the day and 200-0005 would signal that, which is 870, is between 800 and 960. This would leave this data and hang up. Then the numbers 200-0010 to 200-0019 could be used to narrow the range down by dividing the 160 numbers between 800-960 by groups of 16 numbers. In this example the number 200-0014, which always represents the 64th to the 80th minute narrows the time down to the 864th minute to the 880th minute. The steps are repeated again after the attempted call is terminated by the sender after the ANI is given to the receiver. The range of 16 minutes is divided again so that the telephone numbers 200-0020 to 200-0027 represents the 864th to 880th minute of time. In this case the number 200-2022 pins the ETA down to the 870th minute. The numbers 200-0028 to 200-0037 stand for the numbers 0-10. In this case the fourth ETA call which is 200-0028 identifies the number as 0. By this means the receiving PC was given an ETA of 2:30PM. If the fourth ETA Call had been 200-0029, for example, the computer would have displayed 2:31PM on the screen, or if the fourth position call came in from ANI code number 200-2031 this would have been displayed as 2:33PM.

As with the transmission of location information, the ETA is transmitted in a multistep process communicating coarse and fine information items that are delivering the exact ETA when added together. The information items are separately coded into ANIs or DIDs and transmitted successively to the central platform. There, they are converted back and combined additively to the original full and exact information.

The invention using assigned regular telephone numbers (ANIs and DIDs) is particularly advantageous for truck fleet management, since due to the frequent data communication needs the cost savings may be enormous.

A truck fleet management computer is coupled to the computer switch that allows to organize delivery and pick up routes and download them to a vehicle PC as the truck begins its route. The base PC will have in it the latitude and longitude of every address in the drivers territory so that all the dispatcher has to do is type in the address or touch a touch sensitive monitor which is displaying a map of the territory. The PC can build a memory base which can hold information on average driving times between locations.

As the truck moves along on its route it updates the base PC to its location according to changing traffic conditions and problems, if any, with deliveries and pick-ups. The updating can be done very inexpensively and preferably with the data transmission system according to the invention.

As the information is sent to the dispatcher's PC it will change the ETAs and in the case of pick-ups may require some changing of routes. As the dispatcher makes these changes they are transmitted via the transmission technology of the invention to the truck. The truck PC monitor will provide a directional arrow to guide the driver and give information on his next delivery (or pick-up site) and distance in miles and time. Customers can call a toll-free number or use the Internet to get ETAs that can be updated every ten minutes or as often as the customer calls in.

When the customer requests an updated ETA, the Base PC can query the truck PC for little or even no cost when using the data transmission technique according to the invention and get a location report and then calibrate that against the rest of the trucks schedule and provide an up-to-the-minute ETA.

With truck fleet management the transmission of loading data related to the truck are of interest at the fleet management station. A truck weighing system using the invention comprises at the truck solid state equilibrium sensors that are attached to the truck's leaf springs at opposite corners. For instance, one on the rear right wheel and the other at the front left wheel. As the truck is loaded, the leaf springs flatten in direct proportion to the increasing weight of the truck. The two units are hooked to the on-board PC which calculates the changing angle of the leaf springs and translates that information into weight. This information is then transmitted according to the invention.

For monitoring of taxes, truck monitors can be set up at every toll booth and roadside at the border of the state. The unit will be programmed to automatically respond to electronic signals from the toll booth and roadside prompters. The trucks will reply to the prompts by sending their state-registered code numbers and their tonnage.

This information will then be transmitted to a central computer. When the truck leaves the state this information will be matched with the information about the entry. By matching this information, the state can determine the trucks length of stay, the use taxes that it owes, and the taxes that it owes for the cargo that it is carrying based on weight and the nature of the cargo.

In truck fleet management, it is advantageous to monitor the temperature of refrigerated cargos when they are on the way. The data from the GPS unit on the truck and from temperature sensors measuring the refrigerated cargo are transmitted to the central platform using the data transmission technique with ANIs and DIDs according to the invention. The data may be sent on a continous basis or when temperature increases so that the data transmission frequency is high so that the transmission technique according to the invention saves transmission costs. A database at the central platform has address and phone number of every refrigeration storage facility or refrigeration engineering companies. The computer at the base station determines the closest available facility and assists the truck driver when communicating the location back. At the truck the instructions and the new location are display on a map on the local personal computer.

The data transmission technique according to the invention is preferably used to communicate between truckers and shippers for freight allocation to available truckers that are in the vicinity. The system requires GPS receivers and transceivers according to the invention at every truck participating in the system, and in addition GPS systems in all of the offices of companies that subscribe to this service. The trucks and office systems connect to a computer switch of a central platform. The computer at the switch converts data that is transmitted between the switch and the truckers and offices, resp., in order to enable truckers and shippers to coordinate their activities.

For example, a freight broker/forwarder has a customer who needs to ship e.g. 20,000 lbs. of building material as soon as possible to a destination that is 1000 miles away. This freight forwarder scans his PC to find the closest truck that has that much spare capacity and is available to go to that city. As soon as he locates such a truck he either contacts the trucker directly or works through the company that provides the coordination service and controls the switch at the central platform. The freight broker is able to list his requirements in his PC which then shows him the GPS designated locations of every available truck in the area and its capacity and destination if any. Through the communication network between trucker and shippers the central platform knows the exact location of the truck and its projected route if it is en route to any specific location. The communication between all the truckers and shippers is cost effective.

It is the responsibility of the trucker to update the information that he sends to the central platform switch for retransmission to all potential users of his services. This means that the trucker must update the information that the central platform has every time that it adds or removes cargo. It will do this in response to voice prompts from central platform every time that it starts after having opened the doors to the cargo. The voice prompts will ask whether any cargo has been added or removed and whether there is any change in routing. Whenever a truck which is parked waiting for a shipment to deliver begins to move it will be asked information for its new destination, if any, including space availability for new cargo and ETA to the destination. When the shipper asks for a status report for available trucks for the estimated time of a pick up he will not only be able to see the trucks currently in his area, but also trucks which are due to arrive before the required pick up time. The central platform switch will hold all of the pertinent data on the truck and the estimated cost of the shipment. The operator of the central platform may choose to take the responsibility for truck getting to the shipper for an extra charge. This means that if the central platform switch notices that the location of the truck indicates that it may be late it will immediately let the shipper know along with the truck and its base.

The system employing the data transmission technique according to the invention can preferably be combined with other type of transmission techniques. The mobile unit can communicate through RF type techniques, e.g. "walkie-talkies", to a fixed station when it is in vicinity to the station which collects data from different mobile units. RF transmission techniques are non digital AM or FM based transmission techniques. In turn the station communicates to distant central platforms. The system comprises, for example, a GPS unit in the truck. A short-range "walkie-talkie" type unit that transmits data messages between trucks and branch locations. At the local base station, PCs with software to allow the branches after receiving the location reports from the trucks or instructions from the base to transmit location reports and other data to and from the bases via the data transmission technique according to this invention.

Typically a truck will pull into a branch to deliver cargo. As it enters the unloading area, an automated radio signal from the branch will activate the "walkie-talkies" to download an archive stored at the truck of where it has been and how fast it has been going plus any other data that can be useful to the base, such as cargo temperature and engine data. After this information is downloaded via the "walkie-talkie" transmission to the branch computer and sent via the branch transceiver to the base, the base can send instructions to the truck via its transceiver to the branch and from there via the branch "walkie-talkie" sender to the truck "walkie-talkie" receiver. This information can supply the truck with different types of data. These include printouts or electronic maps with route changes in response to "pickup" opportunities, or because of adverse weather conditions or accidents causing detours.

The data transmission technique according to this invention may be used to transmit engine data of a vehicle to the central platform. The system uses three electrode rods that are inserted in the dipstick tube of the engine to measure the amount of impurities in the oil and the oil level. A device that is attached to the top of the three electrode rods is connected to the automobile's electric system and serves as both the transmitter of electric current into one of the rods and measures the current coming from the other two electrodes. This unit then transmits the reading through the vehicle electric system to a PC that is in the vehicle and/or the remote base. The data transmission is performed according to the invention. The operating of the engine can be monitored in frequent time intervals and failure can be detected at an early stage. Using the three electrode configuration, the amount of current flowing from Electrode A to Electrode B will indicate the degree of resistance which will be inversely proportional to the amount of oil in the crankcase. If the oil level drops below the electronic dipstick, the circuit is broken completely. The resistance is also inversely proportional to the impurities in the oil. This measurement is conducted between Electrode A and Electrode C. The greater the impurities, the greater the electric flow through them between Electrode C. This system can also operate where one of the three electrodes is a sensor that detects minute amounts of the impurities of combustion in oil and this information can be sent as part of the same type of apparatus.

According to another coding, alphanumeric characters can be transmitted, e.g. for communicating of route changes and directions from and to a truck of a fleet.

The computer at the central platform sends a code number of e.g. 200-1442 which means that a change in the route is requested. Then the next number would be the name of the city and street and number. The destination address is coded in the following way: each of the letters of the alphabet is represented by a different ANI or DID. For example, A - Z would be 200-2040 to 200-2065, where A would be 200-2040; B would be 200-2041, J would be 200-2049, and Z would be 200-0040. If the new destination was e.g. Reno, Nevada, the computer would shorten this according to a further convention made between the central platform and the truck driver to RN NV, or 200-2057 for R; 200-2053 for N (twice) and 200-2061 for V. This entire message needs four terminated call attempts and can be transmitted within 10 seconds. It will not cause transmission costs compared to the charges that would be encountered when communicating the message through a conventional cellular phone call via personal speaking to the truck driver.

In delivery service companies an amount of delivery reports has to be communicated from the mobile delivery van to the central management office.

When employing the data transmission technique of this invention the time of delivery and the name of the person who signed for the package and the address are sent in cost effective way. The driver need only type the information into the unit or he can just type in the name of the person who signed for the package, plus he can place the order in a slot on the device that sends the information to the base in such a way that the device reads it and sends the message.

If the billing number is 12 digits, for example, then the unit can send 3 Caller ID numbers (DIDs) leaving 4 digits each time, reading from right to left, say, to leave the entire code number. The name of the recipient will not normally be sent unless someone requests it. If the name is sent by code it will normally take 1 ANI or DID per two letters so that a name can be sent in less than 1 second. If the name of the person who received the package is needed, all that the service person needs to do is to send an inquiry to the vehicle using one ANI or DID as a signal including the ID code number for the package. This will normally be done by requesting the 11th package that was delivered that day and this would only need to be done if the number that was sent from the vehicle at the time of delivery carried the coded message that the person who received the package was different from the name on the bill of lading. Normally the number that the vehicle driver will send at the time of delivery is not the full serial number for the package but instead it will be the number corresponding to the order in which it is to be delivered. This means that only one ANI or DID using this system can deliver the time of delivery; the name of the recipient, and the serial number of the package.

Using the invention for meter reading another coding can be used to send reports from meters, e.g. water, gas and electric meters. In each case, the last five digits of the ANI or DID will represent the last five numbers on the water gas or electric meter. Currently, utility companies have to pay the telephone companies to carry the meter readings. With the system according to the invention the costs can be eliminated. Every meter can be programmed to call a specific DID receiving phone number at a specific time. If, for example, the meters were timed to report in with 6 second spacing, it would be possible for as many as 432,000 meter readings to be delivered in a 30 day month.

Another embodiment for meter reading uses RF transmission technique to send meter readings from one meter to another in a pattern over the course of a month so that the cost of meter counting is kept to an absolute minimum. The meters are clustered according to the strength and accurate transmitting range of their RF transmitters. If the transmitting range is e.g. 600 feet, this may be enough to create a cluster of homes in a circle around one receiver-transmitter. The transceiver at the center of each cluster can send the meter readings as it receives them according to the invention with "on-hook" technique using ANIs or DIDs. The RF transmissions within the cluster are timed so that there is no danger of inaccurate billing. Each home sends its reading at a fixed time, e.g. between 8:10AM and 8:20AM on the 1st day of every month, the next home sends the reading on that day but at 8:20AM to 8:30AM, etc.

In a similar way, vending machines are monitored using the data transmission technique according to the invention. First, the transmitted ANI or DID represents the registration number of the vending machine. Then, the next transmitted ANIs or DIDs signifies the slot of the vending machine and the number of already sold articles in the particular slot. This is repeated for all the slots so that at the the central platform managing the refilling of the vending machine, an exact knowledge of the current fill status of the vending machine is available. For example, the first slot or coil or hook had been stocked with 10 candy bars with 8 bars already sold and 5 had been purchased from the last refill and if the machine number is 1670 in a company with 2000 vending machines, the first ANI or DID number to be transmitted may be 263-1670 to identify the vending machine, followed by 263-2005 for the first slot, followed by 263-2008. This is continued until all 40 slots have been checked.

The data transmission technique is advantages for systems where a verification of the user must be performed, e.g. for credit cards. The number of the credit card is sent coded into one or more ANIs or DIDs to the central verification platform without going "off-hook". At the verification platform, a database is checked to verify the card which may take some time. The result of the verification process at the central platform is then communicated back to the card reader. There is no need any more to leave the communication channel open during the verification process. For example, card reading apparatus has all of the 931-0000 to 931-9999 numbers assigned to for a monthly fixed fee. If anyone wants to verify a credit card e.g. no. 3899-512-88-0027, Exp. 11/99, it dials 931-3899 and waits until the caller ID system via the switch captures the number, then immediately sends 931-5121; then 931-8800; then 931-2719. The number 19 represents the number of months until expiration. Conversely the same method can be used with less than 100 ANIs or DIDs to send data back to the card reading machine either verifying or rejecting the request for credit or to ask additional questions.

Depending on the coding that must be performed according to the same rules at the calling and the called unit, all type of messages can be transferred. For example, the invention allows people to notify others when their status has changed. For instance, a plumber can use his cellular phone to notify his office that he has finished a job and he is heading for the next job. His cellular phone would send a call in which the first two digits of the seven digit number would identify the caller. This would be three digits used if there were between 100 and 1000 people hooked to the system. The next digit could say " I've arrived", I'm leaving", "I'm almost finished", "I'm going home". If he were to say "I'll be finished in", the next three digits could finish the sentence with the number of minutes. If the plumber knew he would be finished in twenty minutes, this would require 2 or 3 digits to identify him; 1 or 2 digits for "finished" and 2 digits for "twenty". His office may choose to call back. If so, the dispatcher might say, "When you're finished" which might use 2 digits after the company name has used one digit in the display panel on the cellular phone, "Go to the next job" might just use one digit. One more digit could say address to follow. The next call would then use the first 3 digits for the street number and the final 4 could pick the 1 of 1000 streets in the database and identify the street in this way. The next message could describe the problem from a list and transmit the number that coincides with the problem. In this way and without ever taking the phone "off the hook" and having to pay for the call, the plumber was able to give his status and get his instructions.

As an advantage the vehicle based unit comprises a database that selects the most economical transmission technique. The database in the vehicle based PC will be used to determine when the vehicle is in an urban area where it may be most economical for the location reports to be sent via 2-way radio. This database can also be used to determine when the vehicle is in an area which is not linked to the cellular phone system. This will tell the PC to send its signals by other non-cellular communication services if available. This embodiment employs a means whereby the PC can determine when the normally preferred method is blocked for whatever reason and the routing can either be sent automatically by the best alternative method or the unit can notify the driver and let him decide whether to use the alternative way or to keep trying the preferred way. In addition it comprises a means of calculating and comparing the data transmission costs from every location to the base with every available transmission channel in the PC so that it can always make the best economic decision.

According to another field of application for this invention, there is provided a feature to pagers that enables vehicle owners and drivers to locate their vehicles if the driver cannot find it when returning from hunting or hiking or even in a parking garage or a parking lot. It allows a driver who is away from his vehicle to know immediately if it is being moved without his permission.

The system basically uses a GPS receiver in a vehicle and a portable compass mounted to another GPS unit, and a microprocessor in the pager to provide directions for the person to get back to his vehicle. When the person turns on his pager/portable GPS unit, he gets a periodic signal according to the transmission technique using ANIs and DIDs which gives him the location of his vehicle. The microprocessor attached to the pager compares the location information received from the vehicle with the location reading in its own GPS unit. It immediately calculates the comparative data. On a display mounted on the pager unit the current position is displayed. A pointer like an arrow shows the direction to the lost vehicle. Using the compass the person gets easily back to his vehicle.

When the person is close to the vehicle so that the calculated difference between the vehicle's and the person's position is not any more accurate enough, e.g. beginning at 300 feet. The handheld unit sents a command to the vehicle to blow its horn so that the vehicle can be detected by hearing. The command can be sent by a walkie talkie strength radio signal. The invention is especially useful when returning to a vehicle that has been parked in a multi-storey car park. This embodiment may also be realized without empolying the location transmission technique according to the invention.

It is advantageous to couple a portable cellular telephone to another cellular phone that is fixed in a mobile unit, e.g. a truck, to provide a tandem set of cellular phones. The stationary vehicle cellular phone is attached to a personal computer and has further accessories such as GPS receiver, anti-theft sensors, email capability, faxes, panic buttons, etc. The portable cellular phone has a separate ANI than the vehicle fixed cellular phone. The portable cellular telephone can easily be attached to the fixed telephone and detached therefrom. When it is attached it recharges its battery. The two phones working together can be operated like intercomms with simple messages or the pressing of buttons. The telephones communicate according to the invention, preferably using ANIs and DIDs for data transmission between each other. With the tandem configuration it is advantageous to use the portable cellular telephone that communicates through the vehicle fixed cellular phone.

## Claims

1. System for communicating information of any type and origin from a first unit (17) through a telephone network, wherein at least a portion of said telephone network is a cellular telephone network, to a second unit (22) comprising:
- a transceiver (20) coupled to the first unit (17);
- first means arranged in said first unit (17) for
o converting said information into a signal uniquely identifying said information and for
o calling the second unit (22) and for
o subsequently transmitting said signal through said transceiver (20) over said telephone network;
- second means arranged in said second unit (22) for
o receiving said assigned telephone call number and for
o extracting the information therefrom;
**characterized in that**
- said signal uniquely identifying said information is one of a multitude of assigned telephone call numbers and
- said second means are adapted for extracting said information while the second unit (22) is in an on-hook state.

2. System according to claim 1, **characterized in that** said first unit (17) or said second unit (22) is a mobile unit.

3. System according to claim 1 or 2,
**characterized in that** said assigned telephone call numbers are numbers identifying the calling unit or are numbers identifying the called unit.

4. System according to any of claims 1 to 3,
**characterized in that** the telephone call number carrying the information comprises a first portion uniquely identifying said second unit (22) and a second portion representing at least a part of the information.

5. System according to any of claims 1 to 4,
**characterized in that** said information is a location information obtained from positioning means (18) arranged relative to said first unit (17), the location information being from a predefined area, said area comprising a multitude of locations and each location being associated with a unique one of said multitude of assigned telephone call numbers, said information to be transmitted being formed by said telephone number associated to said location in said area.

6. System according to any of claims 1 to 4,
**characterized in that** said information is a location information obtained from positioning means (18) arranged relative to said first unit (17), the location information being composed of a value for longitude and a value for latitude, each being in a respective range of values, said each range being divided into a number of increments with each increment being associated to one of said assigned telephone call numbers, said information to be transmitted being formed by the telephone call number associated to the increment representing the value for longitude and by the telephone call number associated to the increment representing the value for latitude.

7. System according to any of claims 1 to 4,
**characterized in that** the first unit (17) comprises means to divide said information to be communicated into at least a portion of coarse information and a portion of fine information, whereby said information to be communicated is the sum of said portions, said first unit (17) comprises means to associate a respective telephone call number to said portions and to transmit said telephone call numbers representing coarse and fine information in succession over said network, and said second unit comprises means to additively combine the converted back information.

8. System according to any of claims 1 to 4 or 7,
**characterized in that** said information comprises a time, said time being contained in a time interval, said first unit (17) comprises means to associate a telephone call number to the number of repetitions of said time interval relative to a reference time.

9. System according to any of claims 1 to 8,
**characterized in that** said second unit (22) comprises means to transmit a command signal through said telephone network in order to start the transmitting of said telephone call number representing the information, wherein said first unit (17) includes means for receiving said command signal and for extracting the information therefrom before any telephone call connection from said second unit (22) to said first unit (17) is completed.

10. System according to any of the claims 1 to 9,
**characterized in that** said first unit (17) comprises means to split the information to be transmitted into at least two portions, each of said split portions being converted into one of said assigned telephone call numbers, the first unit (17) being designed to transmit the different telephone call numbers subsequently through said telephone network without the second unit (22) going into the off-hook state and completing the telephone call connection.

11. System according to any of claims 1 to 10,
**characterized in that** said second unit (22) is adapted to send a signal to said first unit (17) indicating that the attempted call from said first to said second unit (17, 22) is incomplete and **in that** said first unit (17) is able to transmit said signal containing said information to said second unit (22).

12. System according to claim 11,
**characterized in that** said signal is adapted to indicate the attempted call being incomplete being a ringing signal or a busy signal and **in that** said second unit (22) is able to remain in an on-hook state regarding the telephone connection between said first and second units (17, 22).

13. System according to any of claims 1 to 12,
**characterized in that** it comprises at least a third unit located in the vicinity to said first unit (17), said third unit is adapted to communicate with said first unit (17) via an RF transmission technique to transmit said information from said at least third unit to said first unit (17).

14. System according to any of claims 1 to 11,
**characterized in that** it comprises a mobile unit including said second unit (22), said mobile unit comprising a further positioning means and comprising means for calculating the difference between a location information obtained from said further positioning means and a location information obtained from said second unit (22) and for issuing a signal indicative of the difference.

15. Method for communicating information of any type and origin from a first unit (17) through a telephone network to a second unit (22) comprising the steps of:
- obtaining information to be transmitted;
- converting said information into a signal uniquely identifying said information at said first unit (17);
- calling said second unit (22) by said first unit (17);
- transmitting said signal through a transceiver (20) over said telephone network, wherein at least within a portion of said telephone network said signal is transmitted through a cellular telephone network;
- receiving said telephone call number at said second unit (22) and
- extracting therefrom the information at said second unit (22);
**characterized in that**
- said signal uniquely identifying said information is one of a multitude of assigned telephone call numbers and
- said extracting said information at said second unit (22) is performed while the second unit (22) is in an on-hook state.

16. Method according to claim 15,
**characterized in that** said first unit (17) or said second unit (22) is a mobile unit.

17. Method according to claim 15 or 16,
**characterized in that** said assigned telephone call numbers are numbers identifying the calling unit or numbers identifying the called unit.

18. Method according to any of claims 15 to 17,
**characterized in that** the telephone call number carrying the information comprises a first portion uniquely identifying said second unit (22) and a second portion representing at least a part of the information.

19. Method according to any of claims 15 to 18,
**characterized in that** said information is a location information relative to said first unit (17), the location information being from a predefined area, said area comprising a multitude of locations, whereby each location is associated with a unique one of said multitude of assigned telephone call numbers, said information to be transmitted is formed by said telephone number associated to said location in said area.

20. Method according to any of claims 15 to 18,
**characterized in that** said information is a location information relative to said first unit (17), the location information being composed of a value for longitude and a value for latitude, each being in a respective range of values, said each range being divided into a number of increments, whereby each increment is associated to one of said assigned telephone call numbers, said information to be transmitted is formed by the telephone call number being associated to the increment representing the value for longitude and by the telephone call number being associated to the increment representing the value for latitude.

21. Method according to any of claims 15 to 18,
**characterized in that** said information to be communicated is divided into at least a portion of coarse information and a portion of fine information, whereby said information to be communicated is the sum of said portions, at said first unit (17) a respective telephone call number is associated to said portions and said telephone call numbers representing coarse and fine information are transmitted in succession over said network, and at said second unit the converted back information is additively combined together.

22. Method according to any of claims 15 to 16 or 19,
**characterized in that** said information comprises a time, said time being contained in a time interval, at said first unit (17) a telephone call number is associated to the number of repetitions of said time interval relative to a reference time.

23. Method according to any of claims 15 to 22,
**characterized in that** from said second unit (22) a command signal is transmitted through said telephone network in order to start the transmitting of said telephone call number representing the information, wherein at said first unit (17) said command signal is received and the information is extracted therefrom before any telephone call connection from said second unit (22) to said first unit (17) is completed.

24. Method according to any of the claims 15 to 23,
**characterized in that** the information to be transmitted is split into at least two portions, each of said split portions being converted into one of said assigned telephone call numbers, the different telephone call numbers are transmitted subsequently through said telephone network without said second unit (22) going into the off-hook state and completing the telephone call connection.

25. Method according to any of claims 15 to 24,
**characterized in that** a signal is sent from said second unit (22) to said first unit (17) indicating that the attempted call from said first to said second unit (17, 22) is incomplete and **in that** said first unit (17) transmits said signal containing said information to said second unit (22).

26. Method according to claim 25,
**characterized in that** said signal indicating the attempted call being incomplete is a ringing signal or a busy signal.

27. Method according to any of claims 15 to 26,
**characterized in that** said information is transmitted to said first unit (17) using an RF transmission technique.

## Patentansprüche

1. System zum Senden von Informationen jeder Art und jeden Ursprungs von einem ersten Gerät (17) über ein Telefonnetz, wobei mindestens ein Teil des Telefonnetzes ein Mobiltelefonnetz ist, an ein zweites Gerät (22), mit
einem Sende-Empfangs-Gerät (20), das mit dem ersten Gerät (17) verbunden ist;
in dem ersten Gerät (17) angeordneten ersten Mitteln zum Umwandeln der Informationen in ein die Informationen eindeutig identifizierendes Signal, zum Anrufen des zweiten Geräts (22) und zum anschließenden Übertragen des Signals mit Hilfe des Sende-Empfangs-Geräts (20) über das Telefonnetz und
in dem zweiten Gerät (22) angeordneten zweiten Mitteln zum Empfangen der dem Telefon zugewiesenen Rufnummer und zum Gewinnen der Informationen aus der Rufnummer,
**dadurch gekennzeichnet, dass**
das die Informationen eindeutig identifizierende Signal eines von einer Vielzahl von zugewiesenen Telefon-Rufnummern ist und
die zweiten Mittel für das Gewinnen der Informationen bei aufgelegtem zweiten Gerät (22) eingerichtet sind.

2. System nach Anspruch 1, **dadurch gekennzeichnet, dass** das erste Gerät (17) oder das zweite Gerät (22) ein Mobilgerät ist.

3. System nach Anspruch 1 oder 2, **dadurch gekennzeichnet, dass** die zugewiesenen Telefon-Rufnummern entweder Nummern sind, die das anrufende Gerät identifizieren, oder Nummern sind, die das angerufene Gerät identifizieren.

4. System nach einem der Ansprüche 1 bis 3, **dadurch gekennzeichnet, dass** die die Informationen tragende Telefon-Rufnummer einen ersten Abschnitt, der das zweite Gerät (22) eindeutig identifiziert, und einen zweiten Abschnitt, der mindestens einen Teil der Informationen verkörpert, aufweist.

5. System nach einem der Ansprüche 1 bis 4, **dadurch gekennzeichnet, dass** die Informationen Positions-Informationen sind, die von Standortbestimmungsmitteln (18) erhalten werden, die relativ zum ersten Gerät (17) angeordnet sind, wobei die Positions-Informationen aus einem vorgegebenen Gebiet mit einer Vielzahl von Orten stammen, jeder Ort mit einer eindeutigen Rufnummer der Vielzahl von zugewiesenen Telefon-Rufnummern verknüpft ist und die zu übertragenden Informationen aus der mit dem Ort in dem Gebiet verknüpften Telefonnummer bestehen.

6. System nach einem der Ansprüche 1 bis 4, **dadurch gekennzeichnet, dass** die Informationen Positions-Informationen sind, die von Standortbestimmungsmitteln (18) erhalten werden, die relativ zum ersten Gerät (17) angeordnet sind, wobei die Positions-Informationen aus einem Wert für die geografische Länge und einem Wert für die geografische Breite bestehen, die jeweils in einem eigenen Bereich von Werten liegen, der jeweils in eine Anzahl von Inkrementen unterteilt ist, die jeweils mit einer der zugewiesenen Telefon-Rufnummern verknüpft sind, wobei die zu übertragenden Informationen aus der Telefon-Rufnummer, die mit dem Inkrement verknüpft ist, das den Wert für die geografische Länge verkörpert, und aus der Telefon-Rufnummer bestehen, die mit dem Inkrement verknüpft ist, das den Wert für die geografische Breite verkörpert.

7. System nach einem der Ansprüche 1 bis 4, **dadurch gekennzeichnet, dass** das erste Gerät (17) Mittel zum Teilen der zu übertragenden Informationen in mindestens einen Teil aus groben Informationen und einen Teil aus feinen Informationen aufweist, sodass die zu übertragenden Informationen die Summe dieser Teile sind, wobei das erste Gerät (17) Mittel zum Verknüpfen einer entsprechenden Telefon-Rufnummer mit den Teilen und zum Nacheinander-Übertragen der Telefon-Rufnummern, die die groben und feinen Informationen verkörpern, über das Netz aufweist und das zweite Gerät (22) Mittel zum additiven Verbinden der rück-umgewandelten Informationen aufweist.

8. System nach einem der Ansprüche 1 bis 4 oder 7, **dadurch gekennzeichnet, dass** die Informationen eine Zeit aufweisen, die in einem Zeit-Intervall enthalten ist, und das erste Gerät (17) Mittel zum Verknüpfen einer Telefon-Rufnummer mit der Anzahl der Wiederholungen des Zeit-Intervalls relativ zu einer Bezugszeit aufweist.

9. System nach einem der Ansprüche 1 bis 8, **dadurch gekennzeichnet, dass** das zweite Gerät (22) Mittel zum Übertragen eines Befehlssignals über das Telefonnetz aufweist, um die Übertragung der die Informationen verkörpernden Telefon-Rufnummer zu starten, wobei das erste Gerät (17) Mittel zum Empfangen des Befehlssignals und zum Gewinnen der Informationen aus dem Befehlssignal, bevor eine Telefonverbindung vom zweiten Gerät (22) zum ersten Gerät (17) beendet wird, aufweist.

10. System nach einem der Ansprüche 1 bis 9, **dadurch gekennzeichnet, dass** das erste Gerät (17) Mittel zum Teilen der zu übertragenden Informationen in mindestens zwei Teile, die jeweils in eine der zugewiesenen Telefon-Rufnummern umgewandelt werden, aufweist, wobei das erste Gerät (17) so ausgelegt ist, dass es die anderen Telefon-Rufnummern anschließend über das Telefonnetz überträgt, ohne dass das zweite Gerät (22) aufgelegt und die Telefonverbindung beendet wird.

11. System nach einem der Ansprüche 1 bis 10, **dadurch gekennzeichnet, dass** das zweite Gerät (22) dafür eingerichtet ist, ein Signal an das erste Gerät (17) zu senden, das anzeigt, dass ein versuchter Anruf vom ersten Gerät (17) zum zweiten Gerät (22) erfolglos ist, und **dadurch gekennzeichnet, dass** das erste Gerät (17) das die Informationen enthaltende Signal an das zweite Gerät (22) senden kann.

12. System nach Anspruch 11, **dadurch gekennzeichnet, dass** das Signal dafür eingerichtet ist, den erfolglosen Anrufversuch durch ein Frei- oder Besetztzeichen anzuzeigen, und dass das zweite Gerät (22) bezüglich der Telefonverbindung zwischen dem ersten Gerät (17) und dem zweiten Gerät (22) aufgelegt bleiben kann.

13. System nach einem der Ansprüche 1 bis 12, **dadurch gekennzeichnet, dass** es mindestens ein sich in der Nähe des ersten Geräts (17) befindendes drittes Gerät aufweist, das dafür eingerichtet ist, mit dem ersten Gerät (17) mittels eines HF-Übertragungsverfahrens zu kommunizieren, um die Informationen von dem mindestens dritten Gerät an das erste Gerät (17) zu senden.

14. System nach einem der Ansprüche 1 bis 11, **dadurch gekennzeichnet, dass** es ein Mobilgerät mit dem zweiten Gerät (22) aufweist, das weitere Standortbestimmungsmittel sowie Mittel zum Berechnen der Differenz zwischen den von den weiteren Standortbestimmungsmitteln erhaltenen Positions-Informationen und den vom zweiten Gerät (22) erhaltenen Positions-Informationen und zum Ausgeben eines die Differenz anzeigenden Signals aufweist.

15. Verfahren zum Senden von Informationen jeder Art und jeden Ursprungs von einem ersten Gerät (17) über ein Telefonnetz an ein zweites Gerät (22) mit den Schritten
Erhalten der zu sendenden Informationen;
Umwandeln der Informationen in ein die Informationen eindeutig identifizierendes Signal am ersten Gerät (17)
Anrufen des zweiten Geräts (22) durch das erste Gerät (17);
Senden des Signals mit Hilfe eines Sende-Empfangs-Geräts (20) über das Telefonnetz, wobei das Signal in mindestens einem Teil des Telefonnetzes über ein Mobiltelefonnetz übertragen wird;
Empfangen der Telefon-Rufnummer am zweiten Gerät (22) und
Gewinnen der Informationen aus der Rufnummer am zweiten Gerät (22),
**dadurch gekennzeichnet, dass**
das die Informationen eindeutig identifizierende Signal eines von einer Vielzahl von zugewiesenen Telefon-Rufnummern ist und
das Gewinnen der Informationen am zweiten Gerät (22) durchgeführt wird, während das zweite Gerät (22) aufgelegt ist.

16. Verfahren nach Anspruch 15, **dadurch gekennzeichnet, dass** das erste Gerät (17) oder das zweite Gerät (22) ein Mobilgerät ist.

17. Verfahren nach Anspruch 15 oder 16, **dadurch gekennzeichnet, dass** die zugewiesenen Telefon-Rufnummern entweder Nummern sind, die das anrufende Gerät identifizieren, oder Nummern sind, die das angerufene Gerät identifizieren.

18. Verfahren nach einem der Ansprüche 15 bis 17, **dadurch gekennzeichnet, dass** die die Informationen tragende Telefon-Rufnummer einen ersten Abschnitt, der das zweite Gerät (22) eindeutig identifiziert, und einen zweiten Abschnitt, der mindestens einen Teil der Informationen verkörpert, aufweist.

19. Verfahren nach einem der Ansprüche 15 bis 18, **dadurch gekennzeichnet, dass** die Informationen Positions-Informationen relativ zum ersten Gerät (17) sind, wobei die Positions-Informationen aus einem vorgegebenen Gebiet mit einer Vielzahl von Orten stammen und das Gebiet eine Vielzahl von Orten aufweist, sodass jeder Ort mit einer eindeutigen Rufnummer der Vielzahl von zugewiesenen Telefon-Rufnummern verknüpft wird, und die zu übertragenden Informationen aus der mit dem Ort in dem Gebiet verknüpften Telefonnummer bestehen.

20. Verfahren nach einem der Ansprüche 15 bis 18, **dadurch gekennzeichnet, dass** die Informationen Positions-Informationen relativ zum ersten Gerät (17) sind, die aus einem Wert für die geografische Länge und einem Wert für die geografische Breite bestehen, die jeweils in einem eigenen Bereich von Werten liegen, der jeweils in eine Anzahl von Inkrementen unterteilt ist, sodass jedes Inkrement mit einer der zugewiesenen Telefon-Rufnummern verknüpft ist, wobei die zu übertragenden Informationen aus der Telefon-Rufnummer, die mit dem Inkrement verknüpft ist, das den Wert für die geografische Länge verkörpert, und aus der Telefon-Rufnummer bestehen, die mit dem Inkrement verknüpft ist, das den Wert für die geografische Breite verkörpert.

21. Verfahren nach einem der Ansprüche 15 bis 18, **dadurch gekennzeichnet, dass** die zu übertragenden Informationen in mindestens einen Teil aus groben Informationen und einen Teil aus feinen Informationen geteilt werden, sodass die zu übertragenden Informationen die Summe dieser Teile sind, am ersten Gerät (17) eine entsprechende Telefon-Rufnummer mit den Teilen verknüpft wird und die Telefon-Rufnummern, die die groben und feinen Informationen verkörpern, nacheinander über das Netz übertragen werden und am zweiten Gerät (22) die rück-umgewandelten Informationen additiv verbunden werden.

22. Verfahren nach einem der Ansprüche 15, 16 oder 19, **dadurch gekennzeichnet, dass** die Informationen eine Zeit aufweisen, die in einem Zeit-Intervall enthalten ist, und am ersten Gerät (17) eine Telefon-Rufnummer mit der Anzahl der Wiederholungen des Zeit-Intervalls relativ zu einer Bezugszeit verknüpft wird.

23. Verfahren nach einem der Ansprüche 15 bis 22, **dadurch gekennzeichnet, dass** von dem zweiten Gerät (22) ein Befehlssignal über das Telefonnetz übertragen wird, um die Übertragung der die Informationen verkörpernden Telefon-Rufnummer zu starten, wobei an dem ersten Gerät (17) das Befehlssignal empfangen wird und die Informationen aus dem Befehlssignal gewonnen werden, bevor eine Telefonverbindung vom zweiten Gerät (22) zum ersten Gerät (17) beendet wird.

24. Verfahren nach einem der Ansprüche 15 bis 23, **dadurch gekennzeichnet, dass** die zu übertragenden Informationen in mindestens zwei Teile geteilt werden, die jeweils in eine der zugewiesenen Telefon-Rufnummern umgewandelt werden, und die anderen Telefon-Rufnummern anschließend über das Telefonnetz übertragen werden, ohne dass das zweite Gerät (22) aufgelegt und die Telefonverbindung beendet wird.

25. Verfahren nach einem der Ansprüche 15 bis 24, **dadurch gekennzeichnet, dass** ein Signal vom zweiten Gerät (22) an das erste Gerät (17) gesendet wird, das anzeigt, dass ein versuchter Anruf vom ersten Gerät (17) zum zweiten Gerät (22) erfolglos ist, und **dadurch gekennzeichnet, dass** das erste Gerät (17) das die Informationen enthaltende Signal an das zweite Gerät (22) sendet.

26. Verfahren nach Anspruch 25, **dadurch gekennzeichnet, dass** das Signal, das anzeigt, dass der Anrufversuch erfolglos ist, ein Frei- oder Besetztzeichen ist.

27. Verfahren nach einem der Ansprüche 15 bis 26, **dadurch gekennzeichnet, dass** die Informationen mittels eines HF-Übertragungsverfahrens an das erste Gerät (17) gesendet werden.

## Revendications

1. Système de communication d'information, d'un type ou d'une origine quelconque, depuis une première unité (17), par un réseau téléphonique, dans lequel au moins une partie dudit réseau téléphonique est un réseau téléphonique cellulaire, vers une deuxième unité (22), comprenant :
- un émetteur-récepteur (20) couplé à la première unité (17) ;
- des premiers moyens, agencés dans ladite première unité (17), pour
o convertir ladite information en un signal identifiant de façon unique ladite information et pour
o appeler la deuxième unité (22) et pour
o transmettre subséquemment ledit signal par ledit émetteur-récepteur (20) sur ledit réseau téléphonique ;
- des deuxièmes moyens, agencés dans ladite deuxième unité (22), pour
o recevoir ledit numéro d'appel téléphonique affecté, et pour
o en extraire l'information ;
**caractérisé en ce que**
- ledit signal identifiant de façon unique ladite information est l'un parmi une pluralité de numéros d'appel téléphonique affectés, et
- lesdits deuxièmes moyens sont adaptés pour extraire ladite information, tandis que la deuxième unité (22) est en un état raccroché.

2. Système selon la revendication 1, **caractérisé en ce que** ladite première unité (17) ou ladite deuxième unité (22) est une unité mobile.

3. Système selon la revendication 1 ou 2, **caractérisé en ce que** lesdits numéros d'appel téléphonique affectés sont des numéros identifiant l'unité appelante ou sont des numéros identifiant l'unité appelée.

4. Système selon l'une quelconque des revendications 1 à 3, **caractérisé en ce que** le numéro d'appel téléphonique portant l'information comprend une première partie, identifiant de façon unique ladite deuxième unité (22), et une deuxième partie, représentant au moins une partie de l'information.

5. Système selon l'une quelconque des revendications 1 à 4, **caractérisé en ce que** ladite information est une information géographique, obtenue d'après des moyens de positionnement (18) agencés par rapport à ladite première unité (17), l'information géographique valant pour une zone prédéfinie, ladite zone comprenant une pluralité de positions géographiques et chaque position géographique étant associée à un numéro d'appel téléphonique unique parmi ladite pluralité de numéros d'appel téléphonique affectés, ladite information à transmettre étant formée par ledit numéro téléphonique, associé à ladite position géographique dans ladite zone.

6. Système selon l'une quelconque des revendications 1 à 4, **caractérisé en ce que** ladite information est une information de position géographique obtenue d'après des moyens de positionnement (18) agencés par rapport à ladite première unité (17), l'information de position géographique étant composée d'une valeur de longitude et d'une valeur de latitude, chacune située dans une plage de valeurs respective, ladite chaque plage étant divisée en une pluralité d'incréments, chaque incrément étant associé à l'un desdits numéros d'appel téléphonique affectés, ladite information à transmettre étant formée par le numéro d'appel téléphonique associé à l'incrément représentant la valeur de la longitude et par le numéro d'appel téléphonique associé à l'incrément représentant la valeur de latitude.

7. Système selon l'une quelconque des revendications 1 à 4, **caractérisé en ce que** la première unité (17) comprend des moyens pour diviser ladite information à communiquer en au moins une partie d'information grossière et une partie d'information fine, de manière que ladite information à communiquer soit la somme desdites parties, ladite première unité (17) comprend des moyens pour associer un numéro d'appel téléphonique respectif auxdites parties et pour transmettre lesdits numéros d'appel téléphonique représentant une information grossière et fine, successivement sur ledit réseau, et ladite deuxième unité comprend des moyens pour combiner par voie additive l'information reconvertie.

8. Système selon l'une quelconque des revendications 1 à 4 ou 7, **caractérisé en ce que** ladite information comprend une valeur de temps, ladite valeur de temps étant contenue dans un intervalle de temps, ladite première unité (17) comprenant des moyens pour associer un numéro d'appel téléphonique au nombre de répétitions dudit intervalle de temps, relativement à un temps de référence.

9. Système selon l'une quelconque des revendications 1 à 8, **caractérisé en ce que** ladite deuxième unité (22) comprend des moyens pour transmettre un signal d'instruction par ledit réseau téléphonique, de manière à lancer la transmission dudit numéro d'appel téléphonique représentant l'information, dans lequel ladite première unité (17) comprend des moyens pour recevoir ledit signal d'instruction et pour en extraire l'information, avant qu'une éventuelle connexion d'appel téléphonique, de ladite deuxième unité (22) à ladite première unité (17), soit achevée.

10. Système selon l'une quelconque des revendications 1 à 9, **caractérisé en ce que** ladite première unité (17) comprend des moyens pour diviser l'information à transmettre en au moins deux parties, chacune desdites parties divisées étant convertie en l'un desdits numéros d'appel téléphonique affectés, la première unité (17) étant conçue pour transmettre les numéros d'appel téléphonique différents subséquemment par ledit réseau téléphonique, sans que la deuxième unité (22) passe à l'état décroché et achève la connexion d'appel téléphonique.

11. Système selon l'une quelconque des revendications 1 à 10, **caractérisé en ce que** ladite deuxième unité (22) est adaptée pour envoyer à ladite première unité (17) un signal, indiquant que l'appel tenté depuis ladite première à ladite deuxième unité (17, 22) est incomplet, et **en ce que** ladite première unité (17) est en mesure de transmettre ledit signal contenant ladite information à ladite deuxième unité (22).

12. Système selon la revendication 11, **caractérisé en ce que** ledit signal est adapté pour indiquer que l'appel tenté incomplet est un signal de sonnerie ou un signal d'occupation, et **en ce que** ladite deuxième unité (22) est en mesure de rester à l'état raccroché, concernant la communication téléphonique entre lesdites première et deuxième unités (17, 22)

13. Système selon l'une quelconque des revendications 1 à 12, **caractérisé en ce qu'**il comprend au moins une troisième unité placée à proximité de ladite première unité, ladite troisième unité étant adaptée pour communiquer avec ladite première unité (17) via une technique de transmission RF, afin de transmettre ladite information de ladite au moins troisième unité à ladite première unité (17).

14. Système selon l'une quelconque des revendications 1 à 11, **caractérisé en ce qu'**il comprend une unité mobile, incluant ladite deuxième unité (22), ladite unité mobile comprenant d'autres moyens de positionnement et comprenant des moyens pour calculer la différence entre une information de position géographique, obtenue d'après lesdits autres moyens de positionnement, et une information de position géographique, obtenue depuis ladite deuxième unité (22), et pour envoyer un signal indicatif de la différence.

15. Procédé de communication d'une information d'un type ou d'une origine quelconque depuis une première unité (17) par un réseau téléphonique vers une deuxième unité (22) comprenant les étapes consistant à :
- obtenir de l'information à transmettre ;
- convertir ladite information en un signal, identifiant de façon unique ladite information à ladite première unité (17) ;
- appeler ladite deuxième unité (22) par ladite première unité (17) ;
- transmettre ledit signal par un émetteur-récepteur (20) sur ledit réseau téléphonique, dans lequel au moins dans une partie dudit réseau téléphonique ledit signal est transmis par un réseau téléphonique cellulaire ;
- recevoir ledit numéro d'appel téléphonique à ladite deuxième unité (22), et
- en extraire l'information à ladite deuxième unité (22),
**caractérisé en ce que**
- ledit signal, identifiant de façon unique ladite information, est l'un parmi une pluralité de numéros d'appel téléphonique affectés, et
- ladite extraction de ladite information faite à ladite deuxième unité (22) est effectuée tandis que ladite deuxième unité (22) est en un état raccroché.

16. Procédé selon la revendication 15, **caractérisé en ce que** ladite première unité (17) ou ladite deuxième unité (22) est une unité mobile.

17. Procédé selon la revendication 15 ou 16, **caractérisé en ce que** lesdits numéros d'appel téléphonique affectés sont des numéros identifiant l'unité appelante ou sont des numéros identifiant l'unité appelée.

18. Procédé selon l'une quelconque des revendications 15 à 17, **caractérisé en ce que** le numéro d'appel téléphonique portant l'information comprend une première partie, identifiant de façon unique ladite deuxième unité (22), et une deuxième partie représentant au moins une partie de l'information.

19. Procédé selon l'une quelconque des revendications 15 à 18, **caractérisé en ce que** ladite information est une information de position géographique, relative à ladite première unité (17), l'information de position géographique venant d'une zone prédéfinie, ladite zone comprenant une pluralité de positions géographiques, de manière que chaque position géographique soit associée à un numéro d'appel téléphonique unique parmi ladite pluralité de numéros d'appel téléphonique affectés, ladite information à transmettre est formée par ledit numéro téléphonique associé à ladite position géographique dans ladite zone.

20. Procédé selon l'une quelconque des revendications 15 à 19, **caractérisé en ce que** ladite information est une information de position géographique, relative à ladite première unité (17), l'information de position géographique étant composée d'une valeur de longitude et d'une valeur de latitude, chacune étant dans une plage respective de valeurs, ladite chaque plage étant divisée en une pluralité d'incréments, de manière que chaque incrément soit associé à l'un desdits numéros d'appel téléphonique affectés, ladite information à transmettre est formée par le numéro d'appel téléphonique associé à l'incrément représentant la valeur de longitude et par numéro d'appel téléphonique associé à l'incrément représentant la valeur de latitude.

21. Procédé selon l'une quelconque des revendications 15 à 18, **caractérisé en ce que** ladite information à communiquer est divisée en au moins une partie d'information grossière et au moins une partie d'information fine, de manière que ladite information à communiquer soit la somme desdites parties, en ladite première unité (17), un numéro d'appel téléphonique respectif est associé auxdites parties, et lesdits numéros d'appel téléphonique, représentant une information grossière et fine, sont transmis, successivement sur ledit réseau et, à ladite deuxième unité, l'information reconvertie est combinée par voie additive.

22. Procédé selon l'une quelconque des revendications 15 à 16 ou 19, **caractérisé en ce que caractérisé en ce que** ladite information comprend une valeur de temps, ledit temps étant contenu dans un intervalle de temps, à ladite première unité (17) un numéro d'appel téléphonique est associé au nombre de répétitions dudit intervalle de temps, par rapport à un temps de référence.

23. Procédé selon l'une quelconque des revendications 15 à 22, **caractérisé en ce que**, dans ladite deuxième unité (22), un signal d'instruction est transmis par ledit réseau téléphonique, de manière à lancer la transmission dudit numéro d'appel téléphonique représentant l'information, dans lequel, à ladite première unité (17), ledit signal d'instruction est reçu et l'information en est extraite, avant qu'une éventuelle connexion d'appel téléphonique depuis ladite deuxième unité (22) à ladite première unité (17) soit achevée.

24. Procédé selon l'une quelconque des revendications 15 à 23, **caractérisé en ce que** l'information à transmettre est divisée en au moins deux parties, chacune desdites parties divisées étant convertie en l'un desdits numéros d'appel téléphonique affectés, les numéros d'appel téléphonique différents sont transmis subséquemment par ledit réseau téléphonique, sans que la deuxième unité (22) passe à l'état décroché et achève la connexion d'appel téléphonique.

25. Procédé selon l'une quelconque des revendications 15 à 24, **caractérisé en ce qu'**un signal est envoyé depuis ladite deuxième unité (22) à ladite première unité (17), indiquant que l'appel tenté depuis ladite première à ladite deuxième unité (17, 22) est incomplet, et **en ce que** ladite première unité (17) transmets ledit signal contenant ladite information à ladite deuxième unité (22).

26. Procédé selon la revendication 25, **caractérisé en ce que** ledit signal, indiquant que l'appel tenté est incomplet, est un signal de sonnerie ou un signal d'occupation.

27. Procédé selon l'une quelconque des revendications 15 à 26, **caractérisé en ce que** ladite information est transmise à ladite première unité (17), en utilisant une technique de transmission RF.
